# EUROPEAN PATENT SPECIFICATION

(11) **EP 1 611 580 B1**
(45) Date of publication and mention of the grant of the patent: **11.01.2012**
(21) Application number: 04721980.3
(22) Date of filing: 19.03.2004
(51) Int. Cl.: G11B 27/036, G11B 27/36

(54) **PLAYLIST SYNCHRONIZATION**
PLAYLIST-SYNCHRONISATION
SYNCHRONISATIONS D'UN REPERTOIRE

(30) Priority: 27.03.2003 EP 03100796
(43) Date of publication of application: 04.01.2006
(73) Proprietor: Koninklijke Philips Electronics N.V., 5621 BA Eindhoven (NL)
(72) Inventor: BODLAENDER, Maarten, P., NL-5656 AA Eindhoven (NL); SINITSYN, Alexandre, NL-5656 AA Eindhoven (NL)
(74) Representative: Groenendaal, Antonius W. M.
(86) International application number: PCT/IB2004/050295
(87) International publication number: WO 2004/086405

(56) References cited:
- EP-A- 0 856 847
- EP-A- 1 143 720
- US-A1- 2002 033 960
- US-A1- 2002 129 693
- PATENT ABSTRACTS OF JAPAN vol. 2000, no. 23, 10 February 2001 (2001-02-10) -& JP 2001 169235 A (MATSUSHITA ELECTRIC IND CO LTD), 22 June 2001 (2001-06-22)
- PATENT ABSTRACTS OF JAPAN vol. 1997, no. 12, 25 December 1997 (1997-12-25) -& JP 09 213006 A (CANON INC), 15 August 1997 (1997-08-15)
- PATENT ABSTRACTS OF JAPAN vol. 1998, no. 13, 30 November 1998 (1998-11-30) -& JP 10 222404 A (SHARP CORP), 21 August 1998 (1998-08-21)
- PATENT ABSTRACTS OF JAPAN vol. 2002, no. 11, 6 November 2002 (2002-11-06) -& JP 2002 197841 A (KENWOOD CORP), 12 July 2002 (2002-07-12)

## Description

The present invention relates to playlist synchronization. More in particular, the present invention relates to the storing of content items, such as songs and video clips, in a user device, such as an MP3 player. Such content items, which are often referred to as "tracks" and which are electronic representations of audio and/or video works, may be stored in the user device. A list of content items is often referred to as a play list: a list of items to be played on the user device.

Examples of storage systems for storing various signals and for automatically managing the storing of the signals may be found in e.g. Patent Abstracts of Japan vol. 2000, no. 23, 10 February 2001; Japanese patent application JP 2001 169235 A; European Patent Application EP-A-1 143 720; and European Patent Application EP-A-0 856 847. United States Patent Application US2002/0129693 discloses a server for storing a plurality of songs. Interactive user devices are capable of sending a list of selected songs to the server which then downloads the requested songs to the devices. In the user devices, a control is provided to allow the user to erase a given song from memory, and a link to the remote server is provided to permit the user to download additional songs.

This known arrangement has the disadvantage that the user has to delete content items (songs) before new content items are downloaded from the server. Should the download fail, for example due to a communications error, the user is left with a device which is only partially filled with content items. In case the user erased all content items, the device has become useless, at least temporarily.

It is an object of the present invention to overcome these and other problems of the Prior Art and to provide a method and a device of the type indicated above which ensures that the user device always contains content items.

Accordingly, the present invention provides a method of storing new content items in a memory unit of a user device, the memory unit containing old content items, the method comprising the steps of:
- marking any old content items which may be deleted in a delete list generated in response to a content item popularity based on statistics received from a remote server,
- determining the storage space required for each new content item to be stored, and
- deleting a marked content item only when necessary to release storage space for storing a new content item, so as to fill the memory unit substantially to capacity.
By deleting a content item only when necessary, it is ensured that content items are not deleted prematurely. As a result, the memory will always contain content items, even if a download of new content items fails and all old content items are marked to be deleted.

Preferably, only as many marked content items are deleted as is necessary to store one new content item. Of course content items may vary in size and a new content item might take up the memory space of three old content items, in which case three old content items have to be deleted. However, by deleting only the old (marked) content items whose memory space corresponds with a single new content item, the memory of the user device is filled to the largest extent possible, even if a download problem occurs. Embodiments can however be envisaged in which as many marked old content items are deleted as is necessary for storing two or more new content items. Such embodiments have the advantage of a greater efficiency when downloading as more memory is made available, and can be used in circumstances where download problems are highly unlikely. If content is coded in multiple quality layers, instead of removing the data of an entire content item, only some of the higher quality layers may be deleted.

Preferably, the new content items to be stored are comprised in a first list, said first list preferably being compiled by a user. This first list may be identical to, or derived from, the so-called play list which the user may compile by means of his user device or by means of any external device, such as a mobile telephone set. Advantageously, the first list is wholly or partially uploaded to a server for selecting the new contents items to be downloaded. The first list may also be generated by an automatic play list generator knowing requirements of a user. E.g., it may contain relaxing songs according to a number of criteria for use in the evening.

It is further preferred that the new content items to be stored are downloaded from a server. The server from which the new content items are downloaded usually is the server to which the first list was uploaded, but this is not necessarily the case as the server to which the first list is uploaded may pass the list to a second server.

In a preferred embodiment, the marked old content items are comprised in a second list, which second list is preferably stored in the device. In this embodiment, the user device contains a list of content items which may be deleted and uses this list to free up memory space when necessary. In accordance with the present invention, the content items stated in this second list are not immediately erased but only when their memory space is required for loading a new content item. It will be understood that instead of having a second list stating the content items that may be deleted (the marked old content items) it is also possible to provide a list of the content items (the unmarked old content items) that may not be deleted when storing new content items.

Each content item may comprise a piece of music and/or a video clip. However, a content item may also comprise a still picture, a text, or any other information.

The present invention additionally provides a software program executable on a processor for carrying out the method as defined above, as well as a data carrier comprising said software program.

The present invention further provides a user device for rendering content items, the device comprising a memory unit for storing content items, rendering means for rendering said stored content items, and processor means for selectively storing new content items in the memory unit containing old content items, the processor being arranged for carrying out the method as defined above.

The present invention also provides a system for transferring content items, the system comprising a server for storing content items, at least one user device as defined above, and transfer means for transferring content items from the server to the user device. The transfer means may comprise the Internet.

The present invention will further be explained below with reference to exemplary embodiments illustrated in the accompanying drawings, in which:
Fig. 1 schematically shows a preferred embodiment of a system according to the present invention.
Fig. 2 schematically shows a user device for use in a system according to the present invention.
Fig. 3 schematically shows the memory of a user device according to the present invention.
Fig. 4 schematically shows a deletion list and a play list according to the present invention.

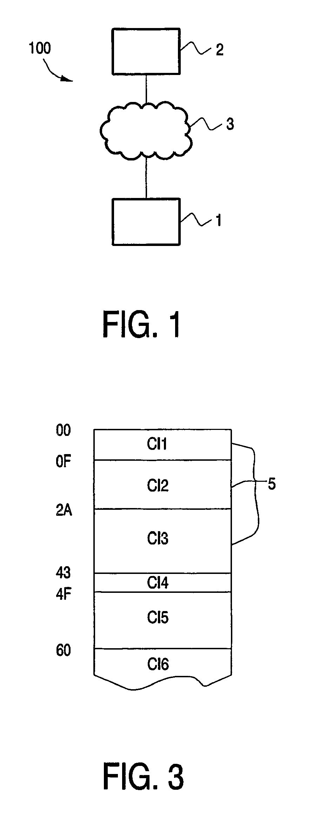

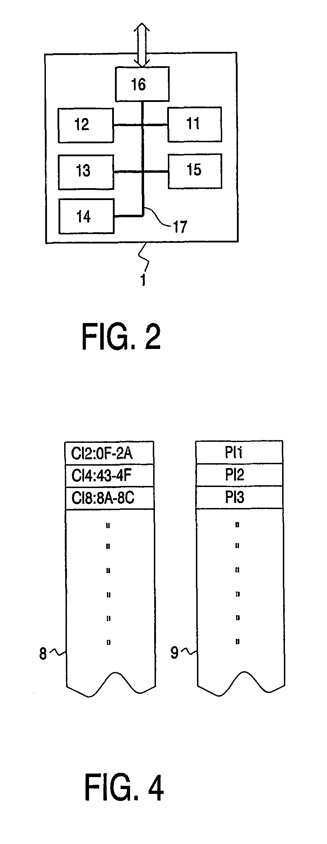

The system 100 shown merely by way of non-limiting example in Fig. 1 comprises a user device 1 and a server 2 connected by a communication link which may involve a network 3, such as the Internet. The user device 1, which will later be further discussed with reference to Fig. 2, is a device which is capable of storing and rendering content items. Suitable content items are songs, video clips, still pictures, texts etc. Rendering such content items will involve playing a song or video clip, thus producing sound and/or image(s).

The server 2 may be a commercially available computer running suitable software programs. Instead of a single server 2, multiple servers may be provided with may be interconnected by the network 3 or by other communication links, for example direct inter-server links.

Although only a single user device 1 is shown in Fig. 1 for the sake of clarity of the illustration, it will be understood that the system 100 may comprise a plurality of user devices 1. The user devices 1 may all be substantially identical, or may be different: some user devices 1 may, for example, only be suitable for rendering audio, while others may be suitable for rendering both audio and video, or just for displaying still pictures.

The communication link between the user device 1 and the server 2 may involve an Internet connection, as discussed above. The actual connection from the user device 1 to the Internet (or another network, such as an Intranet or a telephone network) may be a fixed connection involving a wire or a wireless connection, for example using GSM or UMTS mobile networks. If the server 2 is a home PC, the communication link with the user device 1 may e.g. be a bluetooth connection.

The exemplary user device 1 schematically depicted in Fig. 2 comprises a processor 11, an associated memory unit 12, a display unit 13, a speaker unit 14, a keyboard or keypad unit 15 and an I/O-unit 16, all suitably connected by a data bus and/or other data exchange mechanism 17. Not all these components need to be present and a user device designed for audio only could dispense with the display screen. The user device 1 is preferably a portable device although tabletop or desktop user devices can also be contemplated.

The memory unit 12, which preferably comprises a semiconductor memory, but may also comprise a removable medium such as a disk, may be used to store both software programs executable by the processor 11 and content items, such as songs, video clips, etc.. Two separate memory units could be present, one being reserved for processor software programs and the other being dedicated to the storage of content items. It will be understood that the storage capacity of all memory units will be limited, irrespective of the particular technology used. In order to optimize the usefulness of the user device 1, the available memory capacity is in accordance with the present invention used as efficiently as possible.

An example of a memory structure is schematically shown in Fig. 3, where individual content items 5 are labeled CI1, CI2, etc.. Each content item is shown to take up some memory space. Some content items, for example content items CI3 and CI5, require more memory space than others. Also shown are the (hypothetical) memory addresses of the boundaries of the content items. Content item CI1 is shown to start at address 00 and end at address OF (hexadecimal), where content item CI2 begins. All content items have previously been stored in memory by downloading from a server or copying from an information carrier such as a CD (compact disc). The content items are rendered (for instance played) by the user device in response to user requests. When the user is no longer interested in a particular content item, the content item may be deleted. In accordance with the present invention, however, the particular content item is not immediately deleted. Instead, the (old) content item is marked as "deletable" in a particular file, preferably a dedicated "delete list" as schematically depicted in Fig. 4. In this list, the content items are listed which may be deleted.

To this end, a content item identification and/or its boundary memory addresses may be contained in the delete list 8. This is shown by way of non-limiting example in Fig. 4, where the delete list 8 contains content items CI2 and CI4 with their respective memory addresses (start and end addresses). Fig. 4 also schematically shows a playlist 9 which contains the content items the user wants to be present in her device 1. These content items may be new, that is, not already present in the user device. In the example shown, the playlist 9 contains two content items, respectively denoted PI1 and PI2, which may have been selected from a menu (not shown) downloaded from the server. The memory requirements of these two new content items may not be known in advance, but could have been comprised in the information available in the menu mentioned above.

When compiling a download list on the basis of the playlist 9, a check is carried out to determine whether any elements (content items) of the playlist are already stored in the memory of the device 1. If this is the case, these elements are advantageously not entered in the download list in order to avoid any unnecessary downloads. The download list, which identifies the content items to be downloaded, therefore preferably only contains entries referring to content items which are not already present in the user device. It will be understood that when none of the content items of the playlist is already present in the user device, the download list may be identical to the playlist 9.

To download new content items identified in the download list, the user device 1 establishes a connection with the server 2 (Fig. 1) and uploads the download list. The server then responds by providing the first new content item (PI1 in the example of Fig. 4) and the associated memory requirement (for example 1.43 GB). The memory requirement could be contained in the content item itself, or in a separate message which could be provided before the new content item itself is provided, or could be contained in the menu information as mentioned above. Variants on the storage space determination can also be used, e.g. deleting an expected or maximum amount of storage space for each desired new content item.

The user device 1 downloads the information sent by the server and checks whether sufficient memory is available to store the first new content item. Typically this will not be the case and the user device deletes as many old content items listed in the delete list 8 as necessary to release the required memory space. Once sufficient memory space has been released, the new content item is stored in memory. Advantageously, a buffer (not shown) may be provided to temporarily store the new content item while memory space is being released.

Once the new content item is stored in memory, a new content item (or at least its memory requirement) may be downloaded and the process is repeated either until all new content items of the playlist have been downloaded and stored, or until no more memory space is available. The latter situation could occur if the amount of memory corresponding with the delete list was smaller than the amount of memory required for storing all content items of the playlist. After a new content item has been stored in memory, it can be rendered, preferably even when the downloading of further new content items is still taking place.

It can further be envisaged that the playlist is updated after every download to reflect the content items actually present in the device rather than the content items desired by the user. For this purpose it may be advantageous to store two copies of the playlist in the user device, one copy identifying the content items actually stored in the user device ("actual playlist") and the other identifying the content items which the user would like to be stored ("desired playlist"). When downloading content items, the actual playlist is updated, replacing references to deleted content items with references to newly stored content items. After a successful download, the actual playlist and the desired playlist will normally be identical. When a download fails, if only partially, the actual playlist will not reflect the desired playlist. Still, it will be advantageous for the user to know which content items are available in her user device.

The delete list may be stored in the user device, as discussed above, or may be stored in a server or other computer from which any new content items are normally downloaded. The delete list could be automatically generated on the basis of the number of times a certain content item was played (for example, include in delete list after playing once/twice), its popularity based upon certain statistics (for example a top 10 chart) available from the server, from the internet or from other sources, its age and/or other factors. It can be envisaged that a download list is automatically uploaded, and the downloading of new content items is automatically initiated, each time the user device establishes a connection with the server. It can further be envisaged that the user device automatically establishes a connection with said server when a certain period of time has elapsed (e.g. one week) or when one or more content items have been rendered a certain number of times.

A software program for carrying out the present invention may be embedded in a ROM (Read Only Memory) of the user device, or may be downloaded into the device from a server or ordinary personal computer. In the latter case the personal computer may obtain the program from a suitable data carrier, such as a floppy disc, a CD (Compact Disc) or a DVD (Digital Video Disc).

The present invention is based upon the insight that the memory of an audio/video user device in which content items can be stored should always be filled to ensure that the user will be able to benefit from the device, even when the storage of any new content items is temporarily not possible. The present invention benefits from the further insight that content items should not be erased from the user device's memory before the memory space concerned is to be used for a new content item.

## Claims

1. A method of storing new content items (5) in a memory unit (12) of a user device (1) capable of rendering said content items, the memory unit containing old content items, the method comprising the step of:
- determining a storage space required for each new content item to be stored, and the method being **characterized by** further comprising the steps of:
- marking any old content items which may be deleted in a delete list generated in response to a content item popularity based on statistics received from a remote server, and
- deleting a marked content item only when necessary to release storage space for storing a new content item, so as to fill the memory unit substantially to capacity.

2. The method according to claim 1, wherein only as many marked content items are deleted as is necessary to store one new content item.

3. The method according to claim 1 or 2, wherein the new content items to be stored are comprised in a first list (8).

4. The method according to claim 3, wherein the first list (8) is uploaded to a server (2) for selecting the new contents items to be downloaded.

5. The method according to any of the preceding claims, wherein the new content items to be stored are downloaded from a server (2).

6. The method according to any of the preceding claims, wherein the marked old content items are comprised in a second list (9), which second list is stored in the user device (1).

7. The method according to any of the preceding claims, wherein each content item (5) comprises a piece of music and/or a video clip.

8. A software program executable on a processor for carrying out the method according to any of the preceding claims.

9. A data carrier comprising the software program according to claim 8.

10. A user device (1) for rendering content items (5), the device comprising a memory unit (12) for storing content items, rendering means (13, 14) for rendering said stored content items, and processor means (11) for selectively storing new content items in the memory unit containing old content items, the processor being arranged for:
- determining a storage space required for each new content item to be stored, and the user device (1) being **characterized by** the processor further being arranged for:
- marking any old content items which may be deleted in a delete list generated in response to a content item popularity based on statistics received from a remote server, and
- deleting a marked content item only when necessary to release storage space for storing a new content item, so as to fill the memory unit (12) substantially to capacity.

11. A system (100) for transferring content items, the system comprising a server (2) for storing content items, at least one user device (1) according to claim 10, and transfer means (3) for transferring content items from the server to the user device.

12. The system according to claim 11, wherein the transfer means (3) comprise the Internet.

## Patentansprüche

1. Verfahren zum Speichern neuer Contentitems (5) in einer Speichereinheit (12) einem Benutzergerät, das imstande ist, die genannten Contentitems zu rendern, wobei die Speichereinheit alte Contentitems enthält, wobei das Verfahren den nachfolgenden Verfahrensschritt umfasst:
- das Ermitteln eines Speicherraums, erforderlich für jedes neue zu speichernde Contentitem, und wobei das Verfahren **dadurch gekennzeichnet ist, dass** es weiterhin die nachfolgenden Verfahrensschritte umfasst:
- das Markieren aller alten Contentitems, die gelöscht werden können, in einer Löschliste, die in Reaktion auf die Beliebtheit eines Contentitems auf Basis von einem Fernserver empfangener Statistiken erzeugt wird, und
- das Löschen eines markierten Contentitems nur dann, wenn zum Freigeben von Speicherraum zum Speichern eines neuen Contentitems erforderlich, zum Füllen der Speichereinheit im Wesentlichen bis maximale Auslastung.

2. Verfahren nach Anspruch 1, wobei nur so viele markierte Contentitems gelöscht werden, wie zum Speichern eines neuen Contentitems erforderlich.

3. Verfahren nach Anspruch 1 oder 2, wobei die neuen zu speichernden Contentitems in einer ersten Liste (8) stehen.

4. Verfahren nach Anspruch 3, wobei die erste Liste (8) zum Selektieren der neuen herunter zu ladenden Contentitems zu einem Server (2) hochgeladen wird.

5. Verfahren nach einem der vorstehenden Ansprüche, wobei die neuen zu speichernden Contentitems aus einem Server (2) heruntergeladen werden.

6. Verfahren nach einem der vorstehenden Ansprüche, wobei die markierten alten Contentitems in einer zweiten Liste (9) stehen, wobei diese zweite Liste in einem Benutzergerät (1) gespeichert wird.

7. Verfahren nach einem der vorstehenden Ansprüche, wobei jedes Contentitem (5) ein Musikstück und/oder einen Videoclip enthält.

8. Softwareprogramm, durchführbar in einem Prozessor zum Durchführen des Verfahrens nach einem der vorstehenden Ansprüche.

9. Datenträger mit dem Softwareprogramm nach Anspruch 8.

10. Benutzergerät (1) zum Rendern von Contentitems (5), wobei das Gerät Folgendes umfasst: eine Speichereinheit (12) zum Speichern von Contentitems enthält, Renderingmittel (13, 14) zum Rendern der genannten gespeicherten Contentitems und Prozessormittel (11) zum selektiven Speichern neuer Contentitems in der Speichereinheit, die alte Contentitems enthält, wobei der Prozessor vorgesehen ist:
- zum Ermitteln eines Speicherraums, erforderlich für jedes neue zu speichernde Contentitem, und wobei das Benutzergerät **dadurch gekennzeichnet ist, dass** der Prozessor weiterhin vorgesehen ist:
- zum Markieren aller alten Contentitems, die gelöscht werden können, in einer Löschliste, die in Reaktion auf die Beliebtheit eines Contentitems auf Basis von einem Fernserver empfangener Statistiken erzeugt wird, und
- zum Löschen eines markierten Contentitems nur dann, wenn zum Freigeben von Speicherraum zum Speichern eines neuen Contentitems erforderlich, zum Füllen der Speichereinheit im Wesentlichen bis maximale Auslastung.

11. System (100) zum Übertragen von Contentitems, wobei das System Folgendes umfasst: einen Server (2) zum Speichern von Contentitems, wenigstens ein Benutzergerät (1) nach Anspruch 10, und Übertragungsmittel (3) zum Übertragen von Contentitems aus dem Server zu dem Benutzergerät.

12. System nach Anspruch 11, wobei die Übertragungsmittel (3) das Internet umfassen.

## Revendications

1. Procédé de stockage de nouveaux éléments de contenu (5) dans une unité de mémoire (12) d'un dispositif d'utilisateur (1) qui est capable de rendre lesdits éléments de contenu, l'unité de mémoire contenant des éléments de contenu anciens, le procédé comprenant l'étape suivante consistant à :
- déterminer un espace de stockage qui est requis pour chaque nouvel élément de contenu à stocker, et le procédé étant **caractérisé en ce qu'**il comprend en outre les étapes suivantes consistant à :
- marquer des éléments de contenu anciens quelconques qui peuvent être supprimés dans une liste de suppression étant générée en réponse à une popularité de l'élément de contenu sur la base de statistiques qui sont reçues d'un serveur distant, et
- supprimer un élément de contenu marqué seulement lorsqu'il est nécessaire de libérer de l'espace de stockage pour stocker un nouvel élément de contenu de manière à remplir l'unité de mémoire sensiblement à capacité.

2. Procédé selon la revendication 1, dans lequel seulement autant d'éléments de contenu marqués sont supprimés qu'il n'est nécessaire de stocker un nouvel élément de contenu.

3. Procédé selon la revendication 1 ou selon la revendication 2, dans lequel les nouveaux éléments de contenu à stocker sont compris dans une première liste (8).

4. Procédé selon la revendication 3, dans lequel la première liste (8) est transférée à un serveur (2) pour sélectionner les nouveaux éléments de contenu à télécharger.

5. Procédé selon l'une quelconque des revendications précédentes 1 à 4, dans lequel les nouveaux éléments de contenu à stocker sont téléchargés à partir d'un serveur (2).

6. Procédé selon l'une quelconque des revendications précédentes 1 à 5, dans lequel les éléments de contenu anciens marqués sont compris dans une seconde liste (9), laquelle seconde liste est stockée dans le dispositif d'utilisateur (1).

7. Procédé selon l'une quelconque des revendications précédentes 1 à 6, dans lequel chaque élément de contenu (5) comprend une pièce de musique et/ou un clip vidéo.

8. Programme logiciel qui est exécutable sur un processeur pour la mise en oeuvre du procédé selon l'une quelconque des revendications précédentes 1 à 7.

9. Support de données comprenant le programme logiciel selon la revendication 8.

10. Dispositif d'utilisateur (1) pour rendre des éléments de contenu (5), le dispositif comprenant une unité de mémoire (12) pour stocker des éléments de contenu, des moyens de rendu (13, 14) pour rendre lesdits éléments de contenu stockés et des moyens de traitement (11) pour stocker sélectivement de nouveaux éléments de contenu dans l'unité de mémoire contenant des éléments de contenu anciens, le processeur étant agencé de manière à :
- déterminer un espace de stockage qui est requis pour chaque nouvel élément de contenu à stocker et le dispositif d'utilisateur (1) étant **caractérisé par** le processeur qui est en outre agencé de manière à :
- marquer des éléments de contenu anciens quelconques qui peuvent être supprimés dans une liste de suppression étant générée en réponse à une popularité de l'élément de contenu sur la base de statistiques qui sont reçues d'un serveur distant, et
- supprimer un élément de contenu marqué seulement lorsqu'il est nécessaire de libérer de l'espace de stockage pour stocker un nouvel élément de contenu de manière à remplir l'unité de mémoire (12) sensiblement à capacité.

11. Système (100) pour transférer des éléments de contenu, le système comprenant un serveur (2) pour stocker des éléments de contenu, au moins un dispositif d'utilisateur (1) selon la revendication 10, et des moyens de transfert (3) pour transférer des éléments de contenu à partir du serveur au dispositif d'utilisateur.

12. Système selon la revendication 11, dans lequel les moyens de transfert (3) comprennent l'Internet.
